Europäisches Patentamt

European Patent Office

Office européen des brevets

(11) Publication number: **0 129 621**
**B1**

## (12) EUROPEAN PATENT SPECIFICATION

(45) Date of publication of patent specification: **09.12.87**

(51) Int. Cl.⁴: **C 10 G 11/18, B 01 J 8/26**

(21) Application number: **83303696.5**

(22) Date of filing: **27.06.83**

(54) **Apparatus and process for fluidized catalytic cracking of hydrocarbons and catalyst regeneration.**

(43) Date of publication of application:
**02.01.85 Bulletin 85/01**

(45) Publication of the grant of the patent:
**09.12.87 Bulletin 87/50**

(84) Designated Contracting States:
**DE FR GB IT NL**

(56) References cited:
**FR-A-2 071 125**
**US-A-2 382 382**
**US-A-2 589 124**
**US-A-3 243 265**
**US-A-4 272 402**

(73) Proprietor: **Exxon Research and Engineering Company**
**P.O.Box 390 180 Park Avenue**
**Florham Park New Jersey 07932 (US)**

(72) Inventor: **Luckenbach, Edward Cooper**
**339 Forest Hill Way**
**Mountainside New Jersey (US)**

(74) Representative: **Somers, Harold Arnold et al**
**ESSO Engineering (Europe) Ltd.**
**Patents & Licences**
**Apex Tower High Street**
**New Malden Surrey KT3 4DJ (GB)**

## Description

The present invention relates to an apparatus and a process for fluidized catalytic cracking of hydrocarbons and catalyst regeneration. -

In a fluid catalytic (cat) cracking unit, catalyst is circulated in transfer lines between two vessels, a reactor and a regenerator; each of which can be provided with a dense phase fluidized bed of the catalyst. The feed, generally a gas oil, is preheated and injected, usually with recycle feed, into one of the circulating lines which contains hot regenerated catalyst which is being moved, or transported, from the regenerator to the reactor. The catalyst vaporizes the fresh feed and recycle feed, and the vapor with steam is injected to atomize the liquid feed, and fluidize the catalyst. The feed is cracked at about 482°C (900°F) in the fluidized bed of the reactor in an endothermic reaction which consumes the heat brought from the regenerator by the catalyst. Coke is deposited on the catalyst, this inevitably lessening its activity. The cracked products from the reactor are passed through a staged cyclone separator system which collects entrained catalyst fines and returns them to the reactor. The vapors are passed to a primary fractionator, which separates the gasoline and lighter products from the heavy products. The gasoline and lighter products are sent to a light ends recovery unit while the heavy material is separated and recycled to the reactor, or withdrawn from the unit.

US—A—2589124 describes and claims a process and apparatus for fluidized cat cracking of hydrocarbons. Such apparatus comprises an enlarged vessel adapted to contain a fluidized layer of finely divided solids in the lower portion thereof, means for introducing a fluid stream into the lower portion of said vessel, means for withdrawing gaseous reactants from the upper end of said reaction vessel, a second vessel adapted to contain a fluidized layer of finely divided solids in the lower portion thereof, means for introducing a second fluid stream into the lower portion of said second vessel, means for removing gases from the upper end of said second vessel, means for transferring finely divided solid from the first-named vessel to the second vessel, said last-named means comprising a U-shaped conduit having one end terminating in the lower portion of the first-named vessel, a section of enlarged diameter and of substantial length at the opposite end terminating within said second vessel, the bottom loop of said U-conduit extending a substantial distance below the bottom of said vessels, means for introducing a transporting gas into the base of said section of enlarged diameter and at a point a substantial distance above the loop section of said conduit, means for varying the amount of transporting gas so introduced to control the flow of solid between said vessels and means for maintaining the solids in the transfer conduit upstream from the point of admission of the transporting gas in a dense fluidized state.

According to one embodiment of US—A—2589124, an inverted deflector cone (i.e. having its apex pointing downwards) is located in the second vessel above, and somewhat separated from, the open top of the section of conduit of enlarged diameter therein to give improved distribution of catalyst solids entering a fluidized bed thereof in the second vessel.

US—A—2382382 described and claims a catalytic cracking operation in which the regeneration of spent, coked catalyst is effected in a fluidized bed. The spent, coked catalyst is passed into the fludized bed in admixture with air, and additional air may separately be introduced into the bottom of the fluidized bed.

Regeneration of the catalyst by the removal of deposited coke, and heat balance of the unit are both essential; and in commercial operations both are interrelated. Spent catalyst is withdrawn from the bottom of the reactor, stripped with steam, and then recycled, or conveyed by a stream of air into the regenerator where deposited coke is burned from the catalyst in a dense phase fluidized bed at temperatures ranging from about 1100°F to 1400°F (593 to 760°C). Entrained catalyst is removed by staged cyclone separators, and flue gas is removed from the stack. The hot regenerated catalyst is withdrawn from the regenerator and transported to the reactor to supply heat to the latter.

The spent catalyst recycled to the regenerator contains some unburned hydrocarbons, since it is not possible by present techniques to remove all of the hydrocarbon vapors from the catalyst by stripping. Hence, some hydrocarbon products are carried from the reactor to the regenerator and burned; this consuming some of the regeneration air, and decreasing the yield of useful products. In the combustion, it is desirable to burn all of the coke in the regenerator to carbon dioxide; which, if possible, is certainly not practical. Carbon monoxide is also formed. Carbon monoxide in the flue gas, however, represents wasted heat values, except to the extent that the carbon monoxide can be burned in downstream equipment for recovery of the wasted heat. The flue gases leaving the regenerator differ in composition depending upon the part of the regenerator bed the gases leave since there is only a small amount of lateral mixing of the gases ascending through the regenerator bed. Variations in the carbon monoxide-containing flue gas composition leaving the regenerator can be troublesome. This is because the flue gas is often burned with air in a steam generator, or in a furnace which directly warms the fresh feed or heats other refinery streams. Variations in the carbon monoxide content of the flue gas creates undesirable process instability.

It is desirable to burn all the carbon monoxide in a cat cracker regenerator to very low values, i.e., 500 ppm or less, to meet air pollution regulations directly, or to conserve all the heat of combustion in the process. In this case, it is desirable to have as good a gas distribution as possible inasmuch as it reduces the amount of excess oxygen required to meet the desired low carbon monoxide level. For example, a unit with poor solids/gas distribution may require an excess oxygen content of 2 to 3 percent to obtain a 500 ppm carbon monoxide level, while a unit that has good solids/air distribution can achieve the 500 ppm level with only 0.5 percent excess air.

Some compensation for this unequal distribution of gases in the regenerator bed might be provided by introducing additional air at the location where the catalyst enters the vessel. However, this results in high local gas velocities in the bed which does little to dispose of the problem, and in fact may introduce new problems.

It is, accordingly, the primary objective of the present invention to provide improved apparatus, and process whereby the velocity distribution of air is equalized throughout the bed.

The present invention provides an apparatus embodying a spent, coked catalyst regenerator as used in combination with a hydrocarbon conversion reactor, each of which can contain a dense phase bed of fluidized catalyst, wherein hydrocarbons are converted within said reactor at reaction conditions by contact with the dense phase bed of the said catalyst, the catalyst in said reactor becoming gradually deactivated by the formation of coke on the catalyst, the coke-containing catalyst being transported from the reactor to said regenerator wherein coke is burned from the coked catalyst and reactivated by means which include:

a spent, coked catalyst standpipe through which spent, coked catalyst is conveyed from the reacor to the catalyst regenerator,

a spent coked, catalyst riser operatively communicating with said spent, coked catalyst standpipe for receipt of coked catalyst therefrom, and into which air is injected to transport said catalyst and to introduce at least a portion of the air requirements into said dense phase fluidized catalyst bed of the spent, coked catalyst regenerator for regeneration of same by burning coke from the catalyst,

a deflector located within said regenerator lying within the path of spent, coked catalyst and air entering into the regenerator and against which spent, coked catalyst and air impinge and are dispersed within the dense phase fluidized bed of the regenerator,

a regenerated catalyst standpipe outlet for recycle of regenerated catalyst via a regenerated catalyst riser to the reactor,

characterized by comprising

a conduit communicating with said spent, coked catalyst riser extending into the lower end of said regenerator, the wall of the conduit surrounding said regenerated catalyst standpipe outlet forming an annulus through which spent, coked catalyst and air can be passed into the dense phase fluidized bed of said regenerator,

disc and doughnut distributors or gas distributors circumferentially dispersed about · the inside wall of said conduit and along the outside wall of said regenerated catalyst standpipe outlet forming said annulus to aid in creating a more uniform flow of air and catalyst into the dense phase fluidized bed of said regenerator, and wherein the deflector comprises a radial distributor plate located within said regenerator adjacent to the terminal end of said annulus, the distributor plate serving to substantially uniformly disperse outwardly within the dense phase fluidized bed of the regenerator spent coked catalyst and air which impinge thereagainst.

In another aspect, the invention provides a process using the apparatus as herein described wherein a catalyst is contacted within a reaction zone with a hydrocarbon feed and the hydrocarbon feed is converted into a reaction product with coke being simultaneously deposited on said catalyst, and the spent, coked catalyst is transported to, and contacted with air in the dense phase fluidized bed of a regenerator zone and coke burned from the spent, coked catalyst to regenerate, and reactivate said catalyst, said air being introduced directly into the regeneration zone and being sufficient for complete combustion of the coke from the catalyst, characterized by mixing the spent, coked catalyst externally of the regeneration zone with additional air in a quantity in the range of from 3 to 20% of the total air introduced into the regeneration zone and introducing the mixture of spent catalyst and air into the lower side of the dense phase fluidized catalyst bed of the regeneration zone.

Thus, an objective of the invention is achieved in accordance with the present invention embodying apparatus and process wherein spent, coked catalyst is admixed with combustion air externally to the regenerator and introduced through an annulus, annular area or zone around the spent, coked catalyst standpipe from which regenerated catalyst is removed from the regenerator and recycled to the reactor. Generally from about 3 percent to about 20 percent, preferably from about 5 percent to about 10 percent, of the total air introduced into the regenerator is introduced in this manner and the balance of the air, which is in itself sufficient for complete combustion, is introduced via a separate air inlet into the regenerator. This produces a more even flow of the spent, highly coked catalyst into the regenerator with the result that the coke is burned from the catalyst and a flue gas of more constant composition is produced throughout the regenerator. Hydrocabon contaminants from the reactor, not removed by stripping, are also effectively burned and as a result, the flue gas generated in this portion of the catalyst bed differs little from flue gas formed in other parts of the bed.

The invention, and its principle of operation, will be better understood by reference to the following more detailed description, and to the attached drawings, to which reference is made in the description. -

In the drawings:

Figure 1 depicts, for the most part schematically, a flow diagram of a cat cracking unit, inclusive of reactor, regenerator, and other downstream production facilities.

Figure 2 depicts in partial section the pertinent portions of the regenerator, including particularly the improved apparatus features related to the present invention.

Figure 3 depicts in partial section these improved apparatus features in somewhat greater detail than presented by the preceding figure.

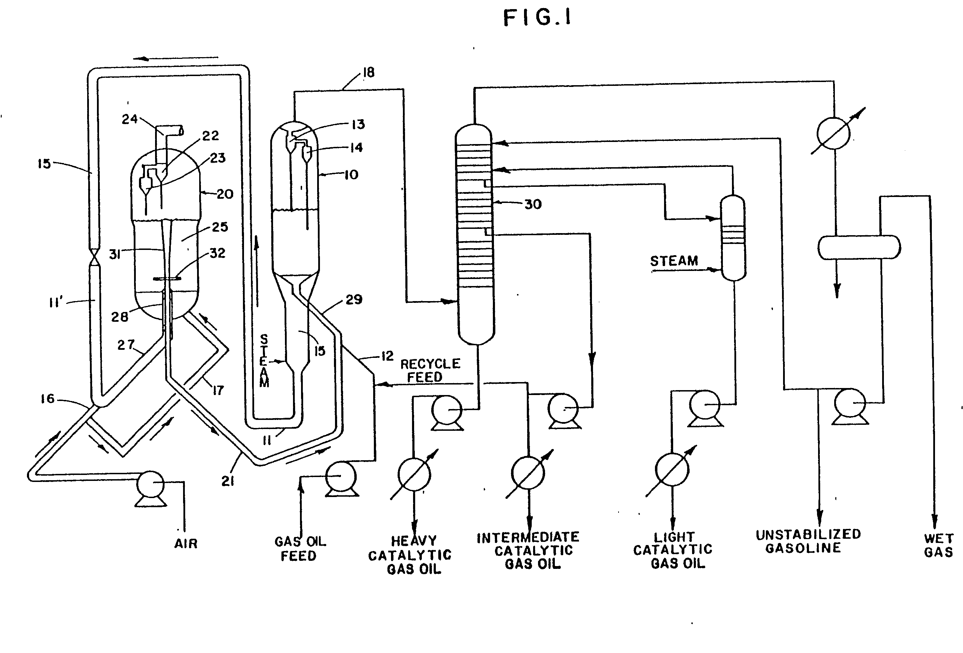

Referring first to Figure 1, there is described generally a reactor 10, a regenerator 20, and a fractionation column or fractionator 30 into which off gas from the reactor 10 is fed and fractionated into various product fractions, inclusive of heavy, intermediate and light catalytic gas oil fractions, unstabilized gasoline and wet gas. The usual feed to the reactor 10 is a virgin gas oil, or portion of a crude oil boiling between about 600°F and 1050°F (316 and 566°C) which contains an admixture of aromatics, naphthenes and paraffins.

Catalyst is circulated rapidly in the U-bend transfer lines 11, 21 between the reactor 10 and regenerator 20. The feed, which is usually a heavy gas oil, is preheated and injected via line 12 into the stream of regenerated catalyst moving from the regenerator 20 to the reactor 10. The hot catalyst vaporizes the oil, and the vapors help to fluidize the catalyst in the reactor. This mixture flows into the reactor 10 where cracking takes place at temperatures usually ranging from 900 to 1000°F (482 to 538°C). The reaction is endothermic and consumes the heat brought from the regenerator 20 by the catalyst.

The cracked products pass out of reactor 10 through two stages of cyclones 13, 14 which collect entrained catalyst and returns it to the dense phase fluidized bed. Velocities at the outlet of the dense bed are normally 2.0—2.5 ft/sec (0.6096—0.720 m/s). Upon leaving the cyclones, the vapors are transmitted via lines 18 to the primary fractionator 30 which separates the heavy products from the gasoline and lighter components. The light products are passed on to the light ends recovery unit, a unit which forms no part of the present invention. The heavy material is separated and either recycled to the reactor 10 or withdrawn from the system.

Carbon, or coke, is all too rapidly deposited on the surface of the catalyst and covers the active sites and, since catalyst activity falls as a result of coke deposition thereon, it is desirable to restore the activity of the catalyst by oxidizing coke or carbon deposits therefrom. In normal operation, the catalyst is held in the reactor stripper vessel 10 only about 1—2 minutes. This is accomplished by the rapid circulation of catalyst between reactor 10 and regenerator 20 via lines 11, 21, which in the large units may represent a solids transfer as high as 40—50 tons/minute (40.6—50.8 tonnes/min).

The spent catalyst is withdrawn from the bottom of the reactor 10, 11 through stripper 15. Spent catalyst is stripped with steam in the stripper 15 to vaporize the hydrocarbons remaining on the surface of the catalyst. Stripping also removes most of the hydrocarbon vapors which are entrained between the particles of catalyst, this preventing most of the hydrocarbon products from being carried to the regenerator 20 and needlessly burned to consume much of the regeneration air, and decrease the yield of useful products.

The stripped catalyst from line 11 enters spent catalyst riser 27 and is picked up by a stream of air introduced via line 16 and carried via the diagonal (i.e. slanting or inclined) oriented catalyst riser 27, and line 28 into the regenerator 20 where the carbon is burned in a fluidized regeneration bed 25 contained in the regenerator 20 at temperatures in the range of from about 1100 to 1400°F (593.3 to 760.0°C) by air introduced into the bed 25. Preferably, most (e.g. at least 80%, preferably 80 to 97%, more preferably 90 to 95%) of the air introduced into the bed 25 is supplied from a main air conduit 17, the remainder or balance of the air supplied (e.g. 20% or less, preferably 3 to 20%, more preferably 5 to 10%) being supplied via line 16. Entrained catalyst is again removed by staged cyclones 22, 23 and the flue gas is emitted through the stack 24. The hot, regenerated catalyst leaving the regenerator 20 via lines 21 takes with it much of the heat of combustion. The heat carried over to the reactor 10 vaporizes the feed and balances the endothermic heat of cracking. Thus, the process is heat balanced.

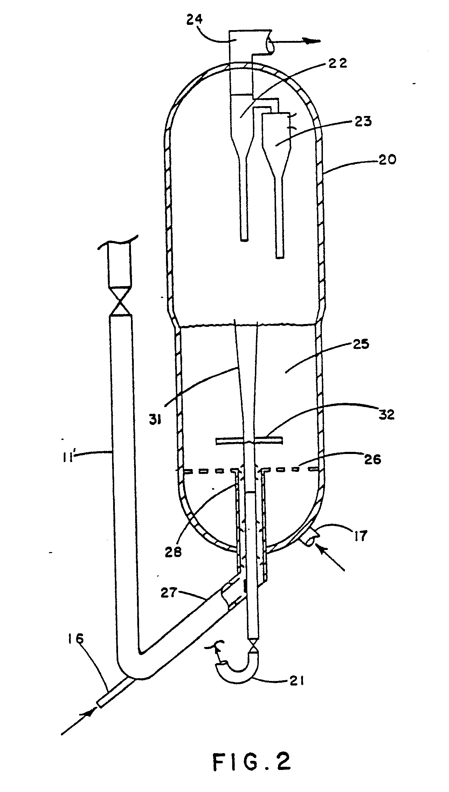

With reference to Figure 2, the regenerator 20 includes a hollow regenerator vessel, the upper portion of which is provided with a pair of staged cyclones 22, 23 and flue gas outlet 24. The lower portion of the regenerator vessel contains, or can contain, a dense phase fluidized bed of catalyst 25 which is supported atop a perforated grid 26. The catalyst in reactor 10 is gradually deactivated by the formation of coke on the catalyst. To maintain catalyst activity, catalyst is transported from the reactor 10 via line 11 to said regenerator 20 wherein coke is burned from the coked catalyst and reactivated. Spent, coked catalyst is conveyed from the reactor 10 to the catalyst regenerator 20 by means which include a spent, coked catalyst standpipe 11 and the diagonally oriented coked catalyst riser 27 operatively communicating with said spent, coked catalyst standpipe 11. Air is injected via line 16 into the coked catalyst riser 27 to transport said catalyst, and introduce at least a portion of the air requirements, or an excess of air into said dense phase fluidized catalyst bed 25 of the spent, coked catalyst regenerator 20 for regeneration of the catalyst. The regenerator 20 also includes a vertically oriented regenerated catalyst standpipe outlet 31 for recycle of regenerated catalyst via line 21 and a regenerated catalyst riser 29 (Figure 1) to the reactor 10.

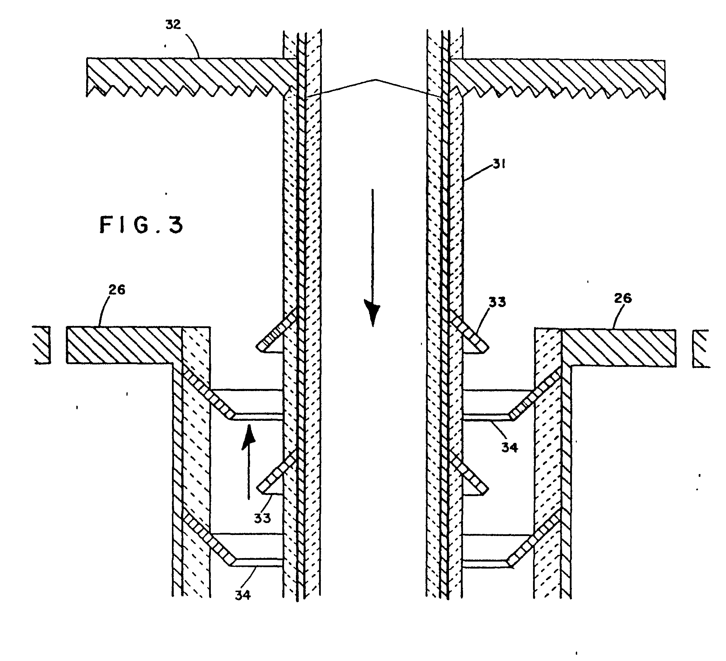

The improvements which constitute key and novel features of the present invention are best described by continued reference to Figure 2, and by further reference to Figure 3. These improvements include a conduit 11 communicating with said spent, coked catalyst riser 27, which extends via members 27, 28 into the lower end of said regeneration vessel 20. The wall of member 28 surrounds said regenerated catalyst standpipe outlet 31 and forms an annulus, or annular zone through which spent, coked catalyst and air can be passed into the dense phase fluidized bed 25 of said regenerator vessel 20. This combination also includes a radial distributor plate or baffle 32 located within said regenerator vessel 20 adjacent to the terminal end of said annulus, the distributor plate 32 lying within the path of the spent, coked catalyst and transporting air entering into the regenerator 20 and against which the spent, coked catalyst and air are impinged and substantially uniformly dispersed outwardly within the dense phase fluidized bed 25 of the regenerator vessel 20. Preferably, the lower face of the distributor plate 32 is notched. Disc and doughnut distributors or gas distributors 33, 34 are circumferentially dispersed about the inside wall of the conduit and along the outside wall of said regenerated catalyst standpipe outlet forming said annulus to aid in creating a more uniform flow of air and catalyst into the dense phase fluidized bed 25 of said regenerator 20.

The spent, coked catalyst riser 27 which conveys catalyst from said reactor 10 to said regenerator 20, it will be observed, is diagonally disposed (or inclined) relative to the horizontal, the segment of the conduit 28 which forms the annulus about said regenerated catalyst standpipe outlet 31 is vertically oriented, the portion of the regenerated catalyst standpipe outlet about which said conduit is disposed is likewise vertically oriented, and the deflector plate 32 is located upon the outer wall of the regenerated catalyst standpipe outlet 31 above and preferably adjacent to the annulus at the location wherein the spent, coked catalyst riser is operatively communicated with said conduit. The annular inlet, it will be observed, empties into the very bottom of the dense phase fluidized bed. This is so that the coke begins to burn from the coked catalyst near the bottom of the bed. Consequently, the catalyst near the top of the dense phase fluidized bed will be of low carbon level, and hydrocarbons that enter with the coked catalyst will be consumed at the bottom of the bed, hence, any combustible material leaving the top of the bed will be burned by the oxygen leaving the bed down to a very low carbon monoxide level.

**Claims**

1. An apparatus embodying a spent, coked catalyst regenerator (20) as used in combination with a hydrogen conversion reactor (10), each of which can contain a dense phase bed (25) of fluidized catalyst, wherein hydrocarbons are converted within said reactor (10) at reaction conditions by contact with the dense phase bed of the said catalyst, the catalyst in said reactor (10) becoming gradually deactivated by the formation of coke on the catalyst, the coke-containing catalyst being transported from the reactor (10) to said regenerator (20) wherein coke is burned from the coked catalyst and reactivated by means which include:

a spent, coked catalyst standpipe (11) through which spent, coked catalyst is conveyed from the reactor to the catalyst regenerator,

a spent, coked catalyst riser (27) operatively communicating with said spent, coked catalyst standpipe (11) for receipt of coked catalyst therefrom, and into which air is injected to transport said catalyst and to introduce at least a portion of the air requirements into said dense phase fluidized catalyst bed of the spent, coked catalyst regenerator for regeneration of same by burning coke from the catalyst,

a deflector (32) located within said regenerator (20) lying within the path of spent, coked catalyst and air entering into the regenerator and against which spent, coked catalyst and air impinge and are dispersed within the dense phase fluidized bed (25) of the regenerator,

a regenerated catalyst standpipe outlet (31) for recycle of regenerated catalyst via a regenerated catalyst riser (21, 29) to the reactor,

characterized by comprising

a conduit (28) communicating with said spent, coked catalyst riser (27) extending into the lower end of said regenerator, the wall of the conduit (28) surrounding said regenerated catalyst standpipe outlet forming an annulus through which spent, coked catalyst and air can be passed into the dense phase fluidized bed (25) of said regenerator,

disc and doughnut distributors or gas distributors (33 and 34) circumferentially dispersed about the inside wall of said conduit (28) and along the outside wall of said regenerated catalyst standpipe outlet (31) forming said annulus to aid in creating a more uniform flow of air and catalyst into the dense phase fluidized bed of said regenerator, and wherein

the deflector (32) comprises a radial distributor plate located within said regenerator adjacent to the terminal end of said annulus, the distributor plate serving to substantially uniformly disperse outwardly within the dense phase fluidized bed of the regenerator spent coked catalyst and air which impinge thereagainst.

2. The apparatus of Claim 1 further characterized in that the lower face of the distributor plate (32) against which the air and catalyst are impinged is notched.

3. The apparatus of Claim 1 or Claim 2 further characterized in that the spent, coked catalyst riser (27) which conveys catalyst from said reactor to said regenerator, is diagonally disposed (i.e. inclined) relative to the horizontal, the conduit (28) which forms the annulus about said regenerated catalyst standpipe outlet (31) is vertically oriented, the portion of the regenerated catalyst standpipe outlet about which said conduit is disposed is likewise vertically oriented, and the radial distributor plate (32) is located upon the outer wall of the regenerated catalyst standpipe outlet.

4. The apparatus of any one of Claims 1 to 3 further characterized in that a plurality of the disc shaped gas distributors (33) are spaced apart one from another and located on the outside wall of the regenerated catalyst standpipe outlet.

5. The apparatus of any one of Claims 1 to 4 further characterized in that a plurality of the doughnut shaped distributors or gas distributors (34) are spaced apart one from another and located on the inside wall of said conduit which surrounds said regenerated catalyst standpipe outlet.

6. A process using the apparatus of any one of Claims 1 to 5 wherein a catalyst is contacted within a reaction zone (10) with a hydrocarbon feed and the hydrocarbon feed is converted into a reaction product with coke being simultaneously deposited on said catalyst, and the spent, coked catalyst is transported to, and contacted with air in the dense phase fluidized bed (25) of a regenerator zone (20) and coke burned from the spent, coked catalyst to regenerate, and reactivate said catalyst, said air being introduced directly into the regeneration zone and being sufficient for complete combustion of the coke from the catalyst, characterized by mixing the spent, coked catalyst externally of the regeneration zone with additional air (16) in a quantity in the range of from 3 to 20% of the total air introduced into the regeneration zone (20), and introducing the mixture of spent catalyst and air into the lower side of the dense phase fluidized catalyst bed (25) of the regeneration zone.

**Patentansprüche**

1. Anlage, die einen Regenerator (20) für verbrauchten, verkokten Katalysator zur Verwendung in Kombination mit einem Kohlenwasserstoffumwandlungsreaktor (10) umfaßt, welche jeweils ein dichtphasiges Bett (25) aus aufgewirbeltem Katalysator enthalten können, wobei Kohlenwasserstoffe in dem Reaktor (10) bei Reaktionsbedingungen durch Kontakt mit dem dichtphasigen Bett des Katalysators umgewandelt werden, der Katalysator in dem Reaktor (10) durch die Bildung von Koks auf dem Katalysator allmählich desaktiviert wird und der kokshaltige Katalysator aus dem Reaktor (10) zu dem Regenerator (20), in dem der Koks von dem verkokten Katalysator abgebrannt wird, transportiert und durch Mittel reaktiviert wird, die folgendes umfassen:

eine Standrohr (11) für verbrauchten, verkokten Katalysator durch das verbrauchter, verkokter Katalysator vom Reaktor zum Katalysatorregenerator befördert wird,

eine Steigrohr (27) für verbrauchten, verkokten Katalysator, das im Betrieb mit dem Standrohr (11) für den verbrauchten, verkokten Katalysator für die Aufnahme von verkoktem Katalysator aus diesem kommuniziert und in das Luft injiziert wird, um den Katalysator zu transportieren und mindestens einen Teil der erforderlichen Luft in das dichtphasige Katalysatorwirbelbett des Regenerators für den verbrauchten, verkokten Katalysator zur Regeneration desselben durch Abbrennen des Koks einzuführen,

eine Ablenkvorrichtung (32), die sich in dem Regenerator (20) befindet und im Strömungsverlauf des verbrauchten, verkokten Katalysators und der in den Regenerator eintretenden Luft liegt und gegen die der verbrauchte, verkokte Katalysator und die Luft anprallen und im dichtphasigen Wirbelbett (25) des Regenerators dispergiert werden,

einen Standrohrauslaß (31) für regenerierten Katalysator für die Rückführung von regeneriertem Katalysator über ein Steigrohr (21, 29) für regenerierten Katalysator zu dem Reaktor, gekennzeichnet durch

eine Leitung (28), die mit dem Steigrohr (27) für den verbrauchten, verkokten Katalysator kommuniziert, das in das untere Ende des Regenerators hineinreicht, wobei die Wandung der Leitung (28), die den Standrohrauslaß für den regenerierten Katalysator umrundet, einen Ringspalt bildet, durch den verbrauchter, verkokter Katalysator und Luft in das dichtphasige Wirbelbett (25) des Regenerators eingeleitet werden können,

Kreisscheiben- und Ring-Verteiler oder Gasverteiler (33 und 34), die am Umfang der Innenwandung der Leitung (28) und entlang der den Ringspalt bildenden Außenwand des Standrohrauslasses (31) für regenerierten Katalysator verteilt sind, um einen gleichmäßigeren Luft- und Katalysatorstrom in das dichtphasige Wirbelbett des Regenerators zu schaffen, und

die Ablenkvorrichtung (32), die eine radiale Verteilerplatte aufweist, die sich in dem Regenerator in der Nähe des abschließenden Endes des Ringspaltes befindet, wobei die Verteilerplatte dazu dient, anprallenden verbrauchten, verkokten Katalysator und Luft im wesentlichen gleichförmig nach außen in dem dichtphasigen Wirbelbett des Regenerators zu verteilen.

2. Anlage nach Anspruch 1, dadurch gekennzeichnet, daß die Unterseite der Verteilerplatte (32), gegen die Luft und Katalysator anprallen, Einkerbungen aufweist.

3. Anlage nach Anspruch 1 oder 2, dadurch gekennzeichnet, daß das Steigrohr (27) für verbrauchten, verkokten Katalysator, das Katalysator aus dem Reaktor zum Regenerator befördert, gegenüber der Horizontalen diagonal (d.h. geneigt) angeordnet ist, die Leitung (28), die den Ringspalt um den Standrohrauslaß (31) für regenerierten Katalysator bildet, vertikal ausgerichtet ist, der Teil des Standrohrauslasses für regenerierten Katalysator, um den herum die Leitung angeordnet ist, ebenfalls vertikal ausgerichtet ist und die radiale Verteilerplatte (32) auf der äußeren Wand des Standrohrauslasses für regenerierten Katalysator angeordnet ist.

4. Anlage nach einem der Ansprüche 1 bis 3, dadurch gekennzeichnet, daß eine Vielzahl von kreisscheibenförmigen Gasverteilern (33) im Abstand voneinander angeordnet sind und sich auf der Außenwand des Standrohrauslasses für regenerierten Katalysator befinden.

5. Anlage nach einem der Ansprüche 1 bis 4, dadurch gekennzeichnet, daß eine Vielzahl von kreisringförmigen Verteilern oder Gasverteilern (34) im Abstand voneinander angeordnet sind und sich an der Innenwand der Leitung befinden, die den Standrohrauslaß für regenerierten Katalysator umgibt.

6. Verfahren unter Verwendung der Anlage gemäß einem der Ansprüche 1 bis 5, bei dem ein Katalysator in der Reaktionszone (10) mit einem Kohlenwasserstoffeinsatzprodukt kontaktiert wird, das Kohlenwasserstoffeinsatzprodukt unter gleichzeitiger Abscheidung von Koks auf dem Katalysator in ein Reaktionsprodukt umgewandelt wird, der verbrauchte, verkokte Katalysator zu dem dichtphasigen Wirbelbett (25) einer Regeneratorzone (20) transportiert und darin mit Luft kontaktiert wird und der Koks vom verbrauchten, verkokten Katalysator abgebrannt wird, um den Katalysator zu regenerieren und zu reaktivieren, wobei die Luft direkt in die Regenerationszone eingeleitet wird und für ein vollständiges Abbrennen des Koks vom Katalysator ausreicht, dadurch gekennzeichnet, daß der verbrauchte, verkokte Katalysator außerhalb der Regenerationszone mit zusätzlicher Luft (16) in einer Menge im Bereich von 3 bis 20% der gesamten in die Regenerationszone (20) eingeleiteten Luft vermischt wird und die Mischung aus verbrauchtem Katalysator und Luft auf der unteren Seite des dichtphasigen Betts aus aufgewirbeltem Katalysator (25) der Regenerationszone eingeleitet wird.

**Revendications**

1. Appareillage comprenant un régénérateur (20) de catalyseur usé recouvert de coke employé en combinaison avec un réacteur (10) de conversion des hydrocarbures, dont chacun peut contenir un lit en phase dense (25) de catalyseur fluidisé, dans lequel des hydrocarbures sont convertis à l'intérieur du réacteur (10) dans des conditions de réaction par contact avec le lit en phase dense du catalyseur, le catalyseur dans ce réacteur (10) devenant graduellement désactivé par la formation de coke sur le catalyseur, le catalyseur contenant du coke étant transporté du réacteur (10) au régénérateur (20), dans lequel le coke est éliminé par combustion du catalyseur recouvert de coke, et réactivé par des moyens qui comprennent:

une conduite montante (11) de catalyseur usé recouverte de coke par laquelle le catalyseur usé recouvert de coke est transporté du réacteur au régénérateur de catalyseur,

une colonne montante (27) de catalyseur usé recouvert de coke communiquant en service avec la conduite montante (11) de catalyseur usé recouvert de coke pour en recevoir le catalyseur recouvert de coke et dans laquelle de l'air est injecté pour transporter ce catalyseur et pour introduire au moins une partie des besoins en air dans le lit de catalyseur fluidisé en phase dense du régénérateur de catalyseur usé recouvert de coke pour la régénération de celui-ci par élimination du coke du catalyseur par combustion,

un déflecteur (32) situé à l'intérieur du régénérateur (20) s'étendant sur le trajet du catalyseur usé recouvert de coke et de l'air entrant dans le régénérateur et contre lequel le catalyseur usé recouvert de coke et l'air se heurtent et sont dispersés à l'intérieur du lit fluidisé en phase dense (25) du régénérateur,

une sortie (31) de la conduite montante de catalyseur régénéré pour le recyclage du catalyseur régénéré par une conduite montante du catalyseur régénéré (21, 29) dans le réacteur,

caractérisé en ce qu'il comprend:

une conduite (28) communiquant avec la conduite montante (27) de catalyseur usé recouvert de coke qui s'étend dans la partie inférieure du régénérateur, la paroi de la conduite (28) entourant la sortie de la conduite montante du catalyseur régénéré en formant un espace annulaire par lequel le catalyseur usé recouvert de coke et l'air peuvent être introduits dans le lit fluidisé (25) en phase dense du régénérateur,

des distributeurs en disque et en anneau ou distributeurs de gaz (33 et 34) répartis le long d'une circonférence sur la paroi interne de la conduite (28) et sur la paroi externe de la sortie (31) de la conduite montante du catalyseur régénéré formant l'espace annulaire pour aider à créer un écoulement d'air et de catalyseur plus uniforme vers le lit fluidisé en phase dense du régénérateur, et dans lequel

le déflecteur (32) comprend une plaque de distribution radiale située à l'intérieur du régénérateur au voisinage de l'extrémité terminale de l'espace annulaire, la plaque de distribution servant à disperser de manière pratiquement uniforme vers l'extérieur, à l'intérieur du lit fluidisé en phase dense du régénérateur, le catalyseur usé recouvert de coke et l'air qui le heurtent.

2. Appareillage selon la revendication 1, caractérisé en outre en ce que la face inférieure de la plaque de distribution (32) contre laquelle se heurtent l'air et le catalyseur est entaillée.

3. Appareillage selon la revendication 1 ou 2, caractérisé en outre en ce que la conduite montante (27) de catalyseur usé recouvert de coke qui transporte le catalyseur du réacteur au régénérateur est disposée en diagonale (c'est-à-dire-inclinée) par rapport à l'horizontale, la conduite (28) qui forme l'espace annulaire autour de la sortie (31) de la conduite montante de catalyseur régénéré est orienté verticalement, la partie de la sortie de la conduite montante de catalyseur régénéré autour de laquelle ladite conduite est disposée est de même orientée verticalement, et la plaque de distribution radiale (32) est située sur la paroi extérieure de la sortie de la conduite montante de catalyseur régénéré.

4. Appareillage de l'une quelconque des revendications 1 à 3, caractérisé en outre en ce qu'une pluralité des distributeurs de gaz en forme de disque (33) sont espacés l'un de l'autre et situés sur la paroi extérieure de la sortie de la conduite montante de catalyseur régénéré.

5. Appareillage selon l'une quelconque des revendications 1 à 4, caractérisé en outre en ce qu'une pluralité des distributeurs en forme de tore ou distributeurs de gaz (34) sont espacés l'un de l'autre et situés sur la paroi intérieure de la conduite qui entoure la sortie de la conduite montante du catalyseur régénéré.

6. Procédé utilisant l'appareillage de l'une quelconque des revendications 1 à 5, dans lequel un catalyseur est mis en contact dans une zone de réaction (10) avec une alimentation hydrocarbonée et l'alimentation hydrocarbonée est convertie en un produit de réaction, du coke se déposant simultanément sur le catalyseur, et le catalyseur usé recouvert de coke est transporté vers le lit fluidisé en phase dense (25) d'une zone de régénération (20) est mis en contact avec de l'air dans ce lit et le coke est éliminé par combustion du catalyseur usé recouvert de coke pour régénérer et réactiver ce catalyseur, cet air étant introduit directement dans la zone de régénération et étant suffisant pour l'élimination complète par combustion du coke du catalyseur, caractérisé en ce que l'on mélange le catalyseur usé recouvert de coke à l'extérieur de la zone de régénération avec de l'air additionnel (16) en une quantité de 3 à 20% du total de l'air introduit dans le zone de régénération (20), et en ce que l'on introduit le mélange de catalyseur usé et d'air dans la partie inférieure du lit de catalyseur fluidisé en phase dense (25) de la zone de régénération.

# FIG.1

0 129 621

FIG. 2

FIG.3